# FASCICULE DE BREVET EUROPEEN

(11) **EP 0 628 757 B1**
(45) Date de publication et mention de la délivrance du brevet: **28.01.1998**
(21) Numéro de dépôt: 94401172.5
(22) Date de dépôt: 27.05.1994
(51) Int. Cl.: F16K 31/60, F16K 21/10

(54) **Dispositif d'assemblage à inviolabilité renforcée pour robinet à fermeture temporisée**
Gegen unberechtigte Betätigung gesicherter selbstschliessender Hahn
Tamper proof device for a self closing valve

(30) Priorité: 11.06.1993 FR 9307029
(43) Date de publication de la demande: 14.12.1994
(73) Titulaire: LES ROBINETS PRESTO Société anonyme dite:, 92120 Montrouge (FR)
(72) Inventeur: Dutheil, Daniel, F-17132 Meschers (FR)
(74) Mandataire: Vander-Heym, Serge

(56) Documents cités:
- CH-A- 294 817
- FR-A- 2 391 406
- GB-A- 2 121 932
- US-A- 2 202 971

## Description

La présente invention est relative à un dispositif d'assemblage à inviolabilité renforcée pour robinet à fermeture temporisée.

Ce dispositif concerne, plus particulièrement, les robinets présentant un corps, en une seule partie, dans lequel on visse une "cartouche" qui constitue un ensemble comportant tous les organes nécessaires au fonctionnement du robinet, ledit corps formant un habillage.

Une telle cartouche est décrite dans le brevet français publié sous le numéro 2391406 et elle comporte, dans sa forme la plus simple, un siège, un clapet, la tige du clapet et le mécanisme de temporisation. Le bouton-poussoir est fixé sur l'extrémité libre de la tige de clapet à l'aide d'une vis axiale.

On sait que de tels robinets sont principalement utilisés dans les sanitaires de collectivités, lieux où les déprédations sont fréquentes. Ainsi, on a pu constater que le bouton-poussoir, dont la vis de fixation est facilement accessible, était fréquemment volé. Dans des cas extrêmes, on a pu constater le vol de la cartouche.

La présente invention concerne un dispositif permettant de dissimuler l'organe de fixation de la cartouche dans le corps du robinet et celui de fixation du bouton-poussoir sur la tige de clapet.

Selon l'invention, le dispositif d'assemblage à inviolabilité renforcée pour robinet à fermeture temporisée comporte un corps, réalisé en une seule partie, dans lequel on fixe une cartouche regroupant tous les éléments nécessaires au fonctionnement à savoir : le siège du robinet, le clapet, la tige de clapet, le mécanisme de temporisation et un bouton-poussoir fixé sur l'extrémité libre de ladite tige de clapet au moyen d'un organe de fixation et est caractérisé en ce que le corps présente, à sa partie supérieure, une jupe comportant un coulisseau présentant un trou dont l'axe est susceptible de coïncider avec celui de l'organe de fixation du bouton-poussoir sur l'extrémité de la tige de clapet, ledit trou étant normalement masqué par la partie supérieure du corps lors de l'utilisation du robinet.

Selon un premier mode de réalisation, l'organe de fixation du bouton-poussoir est constitué par une vis pointeau, disposée radialement, vissée dans le moyeu central dudit bouton-poussoir qui coiffe l'extrémité libre de la tige de clapet.

Selon un second mode de réalisation, l'organe de fixation du bouton-poussoir exerce une force axiale sur la tige de clapet pour plaquer l'extrémité de ladite tige contre le fond de l'alésage borgne du moyeu précité.

Selon un troisième mode de réalisation, applicable aux deux précédents, le volet coulissant est porté par une bague immobilisée axialement et en rotation par rapport au corps.

La présente invention sera mieux comprise par la description qui va suivre faite en se référant aux dessins annexés à titre d'exemple indicatif seulement sur lesquels :
- la figure 1 est une vue partielle, en coupe, montrant la partie supérieure d'un robinet comportant le dispositif de l'invention;
- la figure 2 est une vue en coupe effectuée selon la ligne II-II de la figure 1;
- la figure 3 est une vue analogue à la figure 1 montrant la position du volet coulissant lors de la fixation du bouton-poussoir;
- la figure 4 est une vue partielle, en coupe, limitée au moyeu du bouton-poussoir montrant une variante de réalisation;
- la figure 5 est la vue de gauche de la figure 4;
- la figure 6 est une vue, à grande échelle et en perspective, montrant une pièce permettant la mise en oeuvre du mode de réalisation de la figure 4;
- la figure 7 est une vue en élévation, à grande échelle, d'une pièce susceptible de coopérer avec celle de la figure 6;
- la figure 8 est la vue de dessous de la figure 7;
- les figures 9 à 13 sont des vues partielles et schématiques montrant le verrouillage du bouton-poussoir selon le mode de réalisation des figures 4 à 8, chacune de ces figures comportant deux vues dont celles de gauche correspondent à des vues en coupe verticale effectuées selon un plan passant par l'axe de l'organe de verrouillage du bouton-poussoir.

En se reportant aux dessins et selon un mode de réalisation, on voit que 1 désigne le corps du robinet, moulé en une seule partie, présentant un bec 2 de sortie de l'eau.

De la façon connue, le mécanisme du robinet est constitué par une cartouche 3 engagée dans le corps 1 et vissée à la partie supérieure de ce dernier.

La cartouche 3 présente une tige 4 de commande du déplacement du clapet usuel. Cette tige s'étend au-delà de la cartouche 3 et est ordinairement reliée mécaniquement au bouton-poussoir 5.

Selon l'invention, le bouton-poussoir présente un moyeu 6 comportant un logement 7, constitué par un alésage borgne, coiffant l'extrémité de la tige de clapet 4. La fixation du bouton 5 sur la tige 4 est réalisée par un organe de fixation 8. La rotation de l'organe 8 en vue de la solidarisation du bouton 5 sur la tige est réalisée à l'aide d'un outil, tel qu'une clé hexagonale mâle, traversant un trou 9 d'un coulisseau 10 susceptible d'être déplacé selon la direction de l'axe XY du robinet.

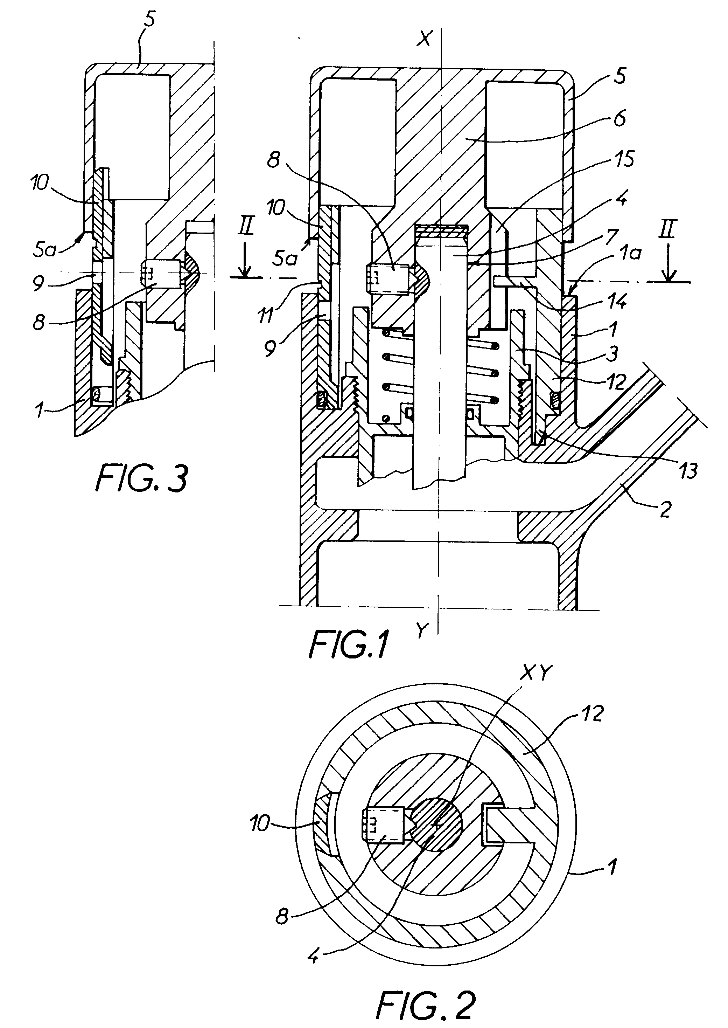

Dans la position représentée sur la figure 1 le trou 9 est masqué et il n'est pas possible d'accéder à l'organe 8 ni même de déceler sa présence pour une personne non avertie.

Le coulisseau 10 présente un cran extérieur 11 permettant, à l'aide d'un outil tel que la pointe d'un tournevis, de manoeuvrer ledit coulisseau pour l'amener de la position représentée sur la figure 1 à celle représentée sur la figure 3 de façon à faire coïncider l'axe du trou 9 avec celui de l'organe 8.

Selon un mode de réalisation, le coulisseau 10 est porté par une bague 12 engagée dans le corps 1 et immobilisée en rotation par rapport à ce dernier. La bague 12 forme une jupe obturant l'espace compris entre la partie supérieure 1a du corps et celle inférieure 5a du bouton 5. L'extrémité supérieure de la bague 12 est normalement recouverte par celle inférieure du bouton 5.

La bague 12 est engagée à force dans le corps 1 et ne peut pas se déplacer librement selon l'axe XY.

A sa partie inférieure, la bague 12 présente un doigt axial 13 susceptible de pénétrer dans un logement du corps 1. Ce doigt 13 remplit une double fonction : il positionne angulairement la bague par rapport au corps et l'immobilise en rotation.

La bague 12 présente un doigt radial 14 engagé dans une rainure 15 du moyeu 6. De cette façon, la rotation du bouton 5 et, par suite, celle de la tige 4, est empêchée. Cette disposition permet d'éviter de faire pivoter la tige 4 et, par voie de conséquence, s'oppose à la rotation du clapet contre son siège

Selon le mode de réalisation décrit en regard des figures 1 à 3, l'organe de fixation 8 est constitué par une vis pointeau qui théoriquement doit assurer une bonne fixation. En fait, l'expérience à démontré que ce mode de fixation n'était pas suffisamment fiable. En effet, le robinet est soumis à des vibrations qui résultent soit de la pression de l'eau soit des enfoncements répétés du bouton 5, celles-ci pouvant entraîner un déblocage de la vis 8.

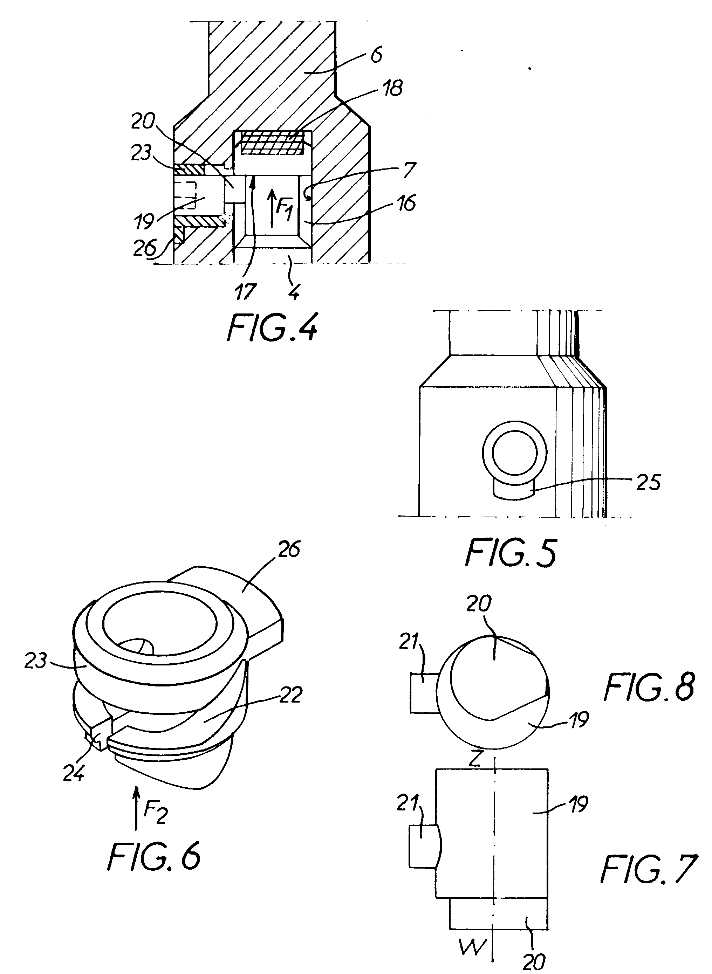

On va maintenant décrire en regard des figures 4 à 13 un autre mode de réalisation qui permet d'obvier l'inconvénient précité.

La tige 4 présente une gorge 16 ménageant un épaulement 17 et l'organe de verrouillage est conçu de façon à exercer sous l'épaulement 17 une force qui tend à déplacer la tige 4 selon la flèche F₁ en comprimant entre son extrémité et le fond de l'alésage borgne 7 un organe élastiquement déformable tel qu'une rondelle de caoutchouc 18.

L'organe de verrouillage est constitué par cylindre 19 présentant à son extrémité une came 20 susceptible, durant la rotation dudit cylindre, de prendre appui sous l'épaulement 17.

Le cylindre 19 présente un doigt radial 21 guidé dans une rainure 22 du moyeu 6. En fait, et pour des raisons de réalisation, la rainure 22 est prévue sur un manchon 23 immobilisé, axialement et en rotation, dans la moyeu 6 du bouton. L'immobilisation du manchon est obtenue, par exemple, par sertissage.

Le manchon 23 est réalisé en une matière élastiquement déformable et présente une fente 24 dont la largeur est inférieure au diamètre du doigt 21.

L'organe de fixation 19 est engagé, à force, dans le manchon 23 par un déplacement selon la flèche F₂, le doigt 21 traversant la fente 24 pour venir se loger dans la rainure 22. Lorsque ces deux pièces sont assemblées, le manchon est engagé sur le moyeu 6 qui présente un évidement 25 de réception d'un doigt 26 du manchon 23 ayant pour fonction de limiter l'enfoncement dudit manchon et de le positionner angulairement.

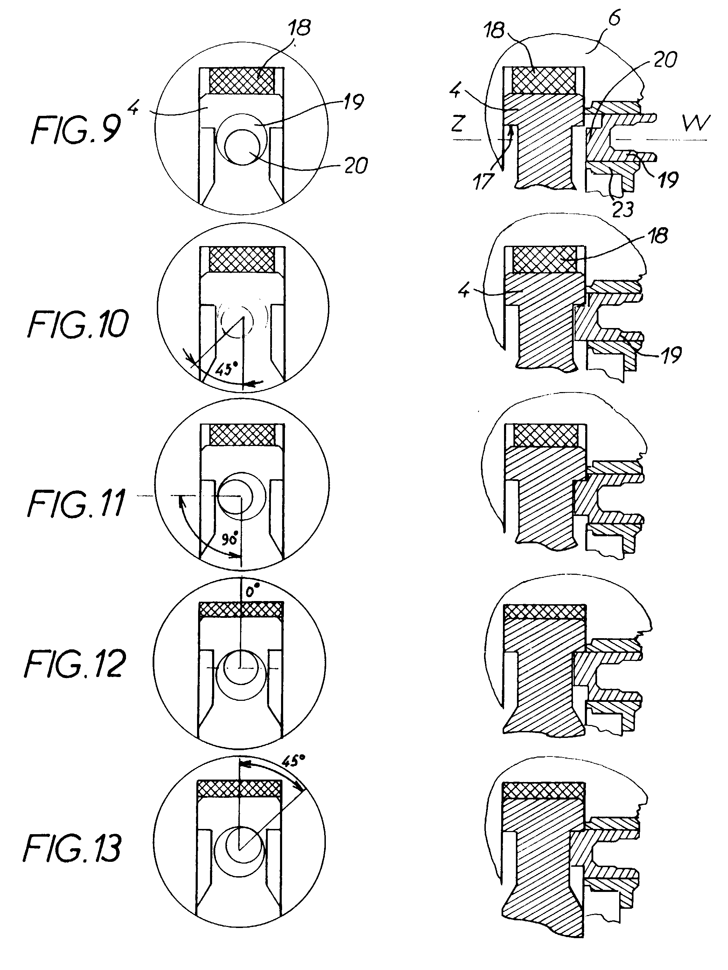

Les figures 9 à 13 illustrent le mode d'action de l'organe de verrouillage décrit en regard des figures 4 à 8.

La rainure 22 présente deux portions : une portion hélicoïdale et une portion circulaire.

Lors de la mise en place du bouton, l'organe 19 est en position escamotée (fig.9) et le doigt 21 est à l'une des extrémités de la portion hélicoïdale.

En faisant pivoter l'organe 19 autour de son axe ZW, on fait pénétrer la came 20 dans la gorge (fig.10), le doigt 21 décrit la portion hélicoïdale de la rainure 22.

En poursuivant la rotation après le point mort haut, c'est-à-dire si on passe de la position montrée sur la figure 12 à celle montrée sur la figure 13, la rondelle 18 se détend légèrement et assure un auto-blocage grace à l'énergie emmagasinée lors de la compression.

Il convient de noter que la dernière partie de la portion circulaire de la rainure pourrait être hélicoïdale avec une pente très faible. Dans ce cas, l'enroulement de l'hélice peut être de même sens que celui de la portion hélicoïdale précitée ou inversé.

Les valeurs angulaires figurant sur les figures 9 à 13 sont purement indicatives et peuvent être modifiées sans sortir du cadre de l'invention.

## Revendications

1. Dispositif d'assemblage à inviolabilité renforcée pour robinet à fermeture temporisée comportant un corps (1), réalisé en une seule partie, dans lequel on fixe une cartouche (3) regroupant tous les éléments nécessaires au fonctionnement, à savoir : le siège du robinet, le clapet, la tige de clapet (4), le mécanisme de temporisation et un boutonpoussoir (5) fixé sur l'extrémité libre de ladite tige de clapet (4) au moyen d'un organe de fixation (8 ou 19), caractérisé en ce que le corps (1) présente, à sa partie supérieure, une jupe comportant un coulisseau (10) présentant un trou (9) dont l'axe est susceptible de coïncider avec celui de l'organe de fixation (8 ou 19) du bouton-poussoir (5) sur l'extrémité de la tige de clapet (4), ledit trou (9) étant normalement masqué par la partie supérieure du corps (1) lors de l'utilisation du robinet.

2. Dispositif selon la revendication 1, caractérisé en ce que le coulisseau (10) peut être déplacé selon une direction parallèle à l'axe (XY) du robinet.

3. Dispositif selon l'une quelconque des revendications 1 ou 2, caractérisé en ce que le coulisseau (10) est porté par une bague (12), immobilisée axialement et en rotation par rapport au corps (1), l'extrémité supérieure de ladite bague étant recouverte par le bord inférieure du bouton-poussoir.

4. Dispositif selon la revendication 3, caractérisé en ce que la bague (12) présente un doigt radial (14) engagé dans une rainure longitudinale (15) du moyeu (6) du bouton-poussoir.

5. Dispositif selon l'une quelconque des revendications 1 à 4 caractérisé en ce que l'organe de fixation (19) peut pénétrer, lors de sa rotation autour de son axe (ZW), dans une gorge (16) de la tige (4) et prendre appui sous l'épaulement (17) ainsi formé pour appliquer le fond du logement (7), prévu dans le moyeu (6) du bouton-poussoir, contre l'extrémité de ladite tige (4) avec interposition d'un organe élastiquement déformable (18).

6. Dispositif selon la revendication 5, caractérisé en ce que l'organe de fixation (19) est constitué par un cylindre présentant une came (20) à son extrémité susceptible, lors de la rotation dudit organe de pénétrer dans la gorge et de prendre appui contre l'épaulement (17) en comprimant l'organe élastiquement déformable (18).

7. Dispositif selon la revendication 6, caractérisé en ce que l'organe de fixation (19) présente un doigt radial (21) guidé dans une rainure (22) du moyeu du bouton-poussoir.

8. Dispositif selon la revendication 7, caractérisé en ce que la rainure (22) présente, au moins deux portions : une portion hélicoïdale et une portion circulaire

## Patentansprüche

1. Vorrichtung zum Zusammenbau mit erhöhtem Mißbrauchsschutz für einen Wasserhahn mit zeitlich verzögert wirkendem Verschlußventil mit einem einteiligen Ventilkörper (1), in dem ein Einsatz (3) mit allen zur einwandfreien Funktion erforderlichen Bauteilen - Ventilsitz, Ventilklappe, Ventilschaft (4), Verzögerungsmechanismus und einem am freien Ende des Ventilschaftes (4) mit einer entsprechenden Befestigung (8 bzw. 19) angebrachten Drucktaster (5) - eingebaut ist, dadurch gekennzeichnet, daß der Ventilkörper (1) auf seiner Oberseite einen Mantel mit einem Gleitstück (10) besitzt, in dem sich eine Bohrung (9) befindet, deren Mittelachse mit der der Befestigung (8 bzw. 19) für den Drucktaster (5) am Ende des Ventilschafts (4) zusammenfällt, wobei die Bohrung (9) beim Benutzen des Wasserhahns gewöhnlich vom Oberteil des Ventilkörpers (1).

2. Vorrichtung nach Patentanspruch 1, dadurch gekennzeichnet, daß das Gleitstück (10) parallel zur Achse (X-Y) des Wasserhahns verlagert werden kann.

3. Vorrichtung nach Patentanspruch 1 oder 2, dadurch gekennzeichnet, daß das Gleitstück (10) mit einem Ring (12) festgehalten wird, der gegenüber dem Ventilkörper (1) in Achs- und Drehrichtung feststeht und dessen Oberkante von der Unterkante des Drucktasters überdeckt wird.

4. Vorrichtung nach Patentanspruch 3, dadurch gekennzeichnet, daß der Ring (12) einen radial vorstehenden Finger (14) aufweist, der in eine in der Nabe (6) des Drucktasters angebrachten Längsnut (15) eingreift.

5. Vorrichtung nach einem der Patentansprüche 1 bis 4, dadurch gekennzeichnet, daß die Befestigung (19) bei der Drehung um ihre Achse (Z-W) in eine im Ventilschaft (4) angebrachte Hohlkehle (16) eindringen und unter der so gebildeten Schulter (17) aufliegen kann, um den Boden der in der Nabe (6) des Drucktasters vorgesehenen Aufnahme (7) über ein elastisch verformbares Zwischenstück (18) gegen das Ende des Ventilschafts (4) zu drücken.

6. Vorrichtung nach Patentanspruch 5, dadurch gekennzeichnet, daß die Befestigung (19) aus einem Zylinder mit einer Nocke (20) an einem Ende besteht, die beim Drehen der Befestigung in die Hohlkehle eindringen und durch Zusammendrücken eines elastisch verformbaren Zwischenstücks (18) unter der so gebildeten Schulter (17) aufliegen kann.

7. Vorrichtung nach Patentanspruch 6, dadurch gekennzeichnet, daß die Befestigung (19) einen radial vorstehenden Finger (21) aufweist, der in einer in der Nabe des Drucktasters angebrachten Nut (22) geführt wird.

8. Vorrichtung nach Patentanspruch 7, dadurch gekennzeichnet, daß die Nut (22) aus mindestens zwei Teilen besteht, nämlich einem spiralförmigen und einem kreisförmigen Teil.

## Claims

1. Reinforced inviolability assembly device for a slow release closing valve comprising a body (1) made up of a single piece in which a cartridge (3) is fixed grouping all the elements required for functioning, namely : the valve seat, the clack valve, the clack valve rod (4), the dwell time mechanism and a push-button (5) secured to the free extremity of said clack valve rod (4) with the aid of a fixing element (8 or 19), characterised in that the body (1) has at its upper portion a skirt comprising a slide (10) having a hole (9) whose axis is able to coincide with that of the fixing element (8 or 19) of the push-button (5) on the extremity of the clack valve rod (4), said hole (9) normally being masked by the upper portion of the body (1) when the valve is used.

2. Device according to claim 1, characterised in that the slide (10) can be moved along a direction parallel to the axis (XY) of the valve.

3. Device according to claim 1 or 2, characterised in that the slide (10) is borne by a ring (12) rendered axially immobilised and in rotation with respect to the body (1), the upper extremity of said ring being covered by the lower edge of the push-button.

4. Device according to claim 3, characterised in that the ring (12) has a radial finger (14) engaged in a longitudinal groove (15) of the hub (6) of the push-button.

5. Device according to any one of claims 1 to 4, characterised in that the fixing element (19)is able to penetrate when rotating around its axis (ZW) into a throat (16) of the rod (4) and take support under the formed shoulder (17) so as to apply the bottom of the housing (7) provided in the hub (6) of the push-button against the extremity of said rod (4) with the insertion of an elastically deformable element (18).

6. Device according to claim 5, characterised in that the fixing element (19) is formed of a cylinder having a cam (20) at its extremity which, at the time of rotation of said element, is able to penetrate into the throat and take support against the shoulder (17) by compressing the elastically deformable element (18).

7. Device according to claim 6, characterised in that the fixing element (19) has a radial finger (21) guided into a groove (22) of the hub of the push-button.

8. Device according to claim 7, characterised in that the groove (22) is formed of two portions : a helical portion and a circular portion.
